# EUROPÄISCHE PATENTANMELDUNG

(11) **EP 3 795 861 A1**
(43) Veröffentlichungstag der Anmeldung: **24.03.2021**
(21) Anmeldenummer: 19198714.8
(22) Anmeldetag: 20.09.2019
(51) Int. Cl.: F16H 57/021, F03D 15/00, F03D 80/70

(54) **LAGERUNG EINES DURCHFÜHRUNGSROHRS**

(71) Anmelder: ZF Friedrichshafen AG, 88046 Friedrichshafen (DE); ZF Wind Power Antwerpen NV, 3920 Lommel (BE); VESTAS WIND SYSTEMS A/S, 8200 Aarhus N (DK)
(72) Erfinder: De Laet, Wim, 2000 Antwerpen (BE); Rottiers, Stijn, 9160 Lokeren (BE)
(74) Vertreter: ZF Friedrichshafen AG

(57) **Zusammenfassung**

Die Erfindung betrifft eine Anordnung mit einem Getriebe, einem Durchführungsrohr (101) und einem Lager (107); wobei das Durchführungsrohr (101) mittels des Lagers (107) drehbar gelagert ist. Das Lager (107) ist außerhalb eines Gehäuses des Getriebes angeordnet.

## Beschreibung

Die Erfindung betrifft eine Anordnung nach dem Oberbegriff von Anspruch 1.

Bei Windkraftanlagen ist ein Trend hin zu integrierten Antriebssträngen zu verzeichnen. Bei einem integrierten Antriebsstrang bilden das Getriebe und der Generator eine bauliche Einheit. Dies zieht Probleme mit Streuströmen nach sich. Die Streuströme können in Form von hochfrequenten Wechselströmen oder niederfrequenten Gleich- oder Wechselströmen auftreten. Es besteht die Gefahr, dass an Verzahnungen und Wälzlagern durch Spannungsüberschläge Schäden auftreten.

Um Folgeschäden aufgrund von Streuströmen zu vermeiden, müssen geeignete Maßnahmen zur Isolierung getroffen werden. Bei mittelschnell laufenden Antriebssträngen sind allerdings die zu übertragenden Drehmomente zwischen Getriebe und Generator vergleichsweise hoch. Gleichzeitig mangelt es aufgrund der integrierten Bauweise des Antriebsstrangs zwischen Getriebe und Generator an verfügbarem Bauraum. Dies erschwert eine ausreichende Dimensionierung der drehmomentübertragenden Bauteile. Dies betrifft insbesondere die elektrische Isolierung der drehmomentübertragenden Bauteile.

Der Erfindung liegt die Aufgabe zugrunde, eine gegenüber den aus dem Stand der Technik bekannten Getrieben verbesserte Lösung verfügbar zu machen. Insbesondere sollen Schäden, die in einem integrierten Antriebsstrang aufgrund von Streuströmen auftreten können, vermieden werden.

Diese Aufgabe wird gelöst durch eine Anordnung nach Anspruch 1. Bevorzugte Weiterbildungen sind in den Unteransprüchen enthalten.

Die Anordnung umfasst ein Getriebe, ein Durchführungsrohr und ein Lager. Ein Durchführungsrohr, auch Pitch Tube genannt, ist ein Rohr zum Durchführen von, etwa elektrischen oder hydraulischen Versorgungsleitungen durch das Getriebe. Es zeichnet sich dadurch aus, dass es durch das Getriebe bzw. das Gehäuse des Getriebes hindurchführt und seine Mündungen außerhalb des Getriebes bzw. des Gehäuses des Getriebes angeordnet sind. Gegenüber dem Gehäuse des Getriebes ist das Durchführungsrohr bevorzugt schmierstoffundurchlässig abgedichtet.

Das Durchführungsrohr ist mittels des Lagers drehbar gelagert. Insbesondere kann es sich bei dem mindestens ein Lager um das einzige Lager handeln, mit dem das Durchführungsrohr gelagert ist.

Erfindungsgemäß ist das Lager außerhalb des Getriebes bzw. außerhalb eines Gehäuses des Getriebes angeordnet. Auf diese Weise lässt sich vermeiden, dass Streuströme, die von einem Generator verursacht werden, von dem Durchführungsrohr übertragen und über das Lager in das Getriebe eingeleitet werden.

In einer bevorzugten Weiterbildung umfasst die Anordnung einen Generator, der drehwirksam mit dem Getriebe verbunden ist. Eine Ausgangswelle des Getriebes ist also drehfest mit einer Eingangswelle des Generators gekoppelt. Weiterbildungsgemäß ist das Durchführungsrohr mittels des Lagers drehbar in dem Generator gelagert. Dies bedeutet, dass eine erste von zwei relativ zueinander verdrehbaren Lagerschalen des Lagers an bzw. auf dem Durchführungsrohr und eine zweite der beiden Lagerschalen an bzw. in dem Generator fixiert ist.

In einer bevorzugten Weiterbildung ist der Generator mindestens teilweise auf derselben axialen Seite des Lagers angeordnet wie das Getriebe. Wenigstens ein Teil des Generators liegt also auf derselben Seite einer radial, das heißt orthogonal zu einer Drehachse des Getriebes, insbesondere einer Drehachse des Durchführungsrohrs verlaufenden Ebene wie das Getriebe. Dies impliziert, dass das Durchführungsrohr durch den genannten Teil des Generators hindurchverläuft, sodass der Teil des Generators axial zwischen dem Getriebe und dem Lager angeordnet ist.

Bevorzugt ist der Generator vollständig auf derselben axialen Seite des Lagers angeordnet wie das Getriebe. Bei einer bevorzugten Weiterbildung ist das Lager entsprechend an einer Abschlussplatte des Generators angebracht bzw. mit seinem Außenring in der Abschlussplatte fixiert. Die oben genannte Ebene verläuft dann durch die Abschlussplatte.

Das Durchführungsrohr kann drehfest in einer drehbar gelagerten Komponente, etwa einem Planetenträger, des Getriebes fixiert sein. In diesem Fall ist das Durchführungsrohr in der drehbar gelagerten Komponente und der ersten Lagerschale des Lagers fixiert. Vorzugsweise ist diese Aufzählung der Fixierstellen des Durchführungsrohrs abschließend, und das Durchführungsrohr ist in keiner weiteren Stelle fixiert. Dies bedeutet, dass das Durchführungsrohr ausschließlich in der drehbar gelagerten Komponente und dem Lager fixiert ist. Das Lager weist bevorzugt genau zwei Laufbahnen - eine äußere und eine innere Laufbahn - auf.

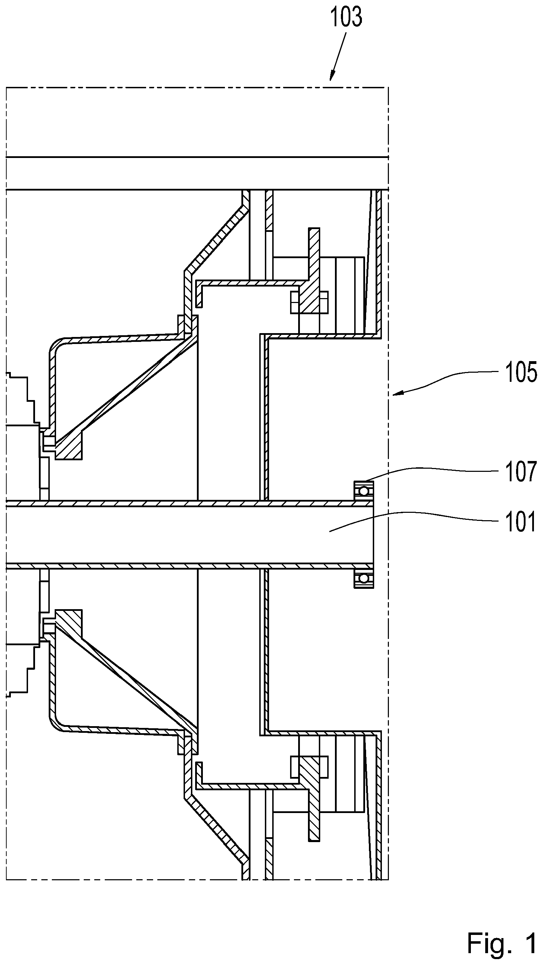

Ein Ausführungsbeispiel der Erfindung ist in Fig. 1 dargestellt. Im Einzelnen zeigt:
- Fig. 1: einen generatorseitigen Abschnitt eines Durchführungsrohrs.

Das in Fig. 1 dargestellte Durchführungsrohr 101 dient der Verlegung von Versorgungsleitungen durch einen Generator 103 und ein in Fig. 1 nicht dargestelltes Getriebe, das mit dem der Generator 103 drehwirksam gekoppelt ist.

Aus der Perspektive von Fig. 1 zur rechten Seite hin wird der Generator 103 durch eine Abschlussplatte 105 gekapselt. Die Abschlussplatte 105 bildet also einen rechtsseitigen bzw. generatorseitigen Abschluss des Gehäuses.

Mittels eines Lagers 107 ist das Durchführungsrohr 101 drehbar in der Abschlussplatte 105 gelagert. Das Durchführungsrohr 101 ist in einem Innenring des Lagers 107 fixiert. Ein Außenring des Lagers 107 ist in der Abschlussplatte 105 fixiert.

### Bezuqszeichen

- 101: Durchführungsrohr
- 103: Generator
- 105: Abschlussplatte
- 107: Lager

## Patentansprüche

1. Anordnung mit einem Getriebe, einem Durchführungsrohr (101) und einem Lager (107); wobei
das Durchführungsrohr (101) mittels des Lagers (107) drehbar gelagert ist; **dadurch gekennzeichnet, dass**
das Lager (107) außerhalb eines Gehäuses des Getriebes angeordnet ist.

2. Anordnung nach Anspruch 1; **gekennzeichnet durch**
einen drehwirksam mit dem Getriebe verbundenen Generator (103); wobei
das Durchführungsrohr (101) mittels des Lagers (107) in dem Generator (103) gelagert ist.

3. Anordnung nach dem vorhergehenden Anspruch;
der Generator (103) mindestens teilweise auf derselben axialen Seite des Lagers (107) angeordnet ist wie das Getriebe.

4. Anordnung nach dem vorhergehenden Anspruch; **dadurch gekennzeichnet, dass** das Lager (107) an einer Abschlussplatte des Generators (103) angebracht ist.
